# EUROPEAN PATENT APPLICATION

(11) **EP 3 889 244 A1**
(43) Date of publication of application: **06.10.2021**
(21) Application number: 19839662.4
(22) Date of filing: 27.11.2019
(51) Int. Cl.: C12G 1/00, C12H 3/04, B01D 61/42, B01D 61/46

(54) **PROCESS OF ELECTRODIALYSIS FOR STABILIZING WINES WITH LOW WATER CONSUMPTION**

(30) Priority: 27.11.2018 PT 2018115176
(71) Applicant: Wineinova, LDA, 1900-126 Lisboa (PT); Instituto Superior Técnico, 1049-001 Lisboa (PT)
(72) Inventor: GERALDES FERNANDES, Vitor Manuel, 1800-142 Lisboa (PT); DE BRITO ESTRELA, Rui, 1500-714 Lisboa (PT)
(74) Representative: Patentree
(86) International application number: PCT/IB2019/060230
(87) International publication number: WO 2020/110029

(57) **Abstract**

The present disclosure relates to a method for reducing water consumption in tartaric stabilization of wine by electrodialysis, comprising the following steps: passing an aqueous stream comprising a weak organic acid between a tank and an electrodialysis module; feeding the electrodialysis module with a stream of wine to be treated so that potassium bitartrate or calcium tartrate pass from the wine to be treated to the aqueous stream which flows between the tank and the electrodialysis module, so that during the passage of the aqueous stream through the electrodialysis module, the potassium bitartrate or calcium tartrate initially present in the wine stream are transferred to the aqueous stream and discarding the aqueous stream when it reaches a certain potassium bitartrate or calcium tartrate saturation point.

## Description

### Technical Field

This disclosure relates to a process for tartaric stabilization of wines by electrodialysis characterized by having a low water consumption, in addition to reducing the risk of wine contamination with brine, and preventing wine losses. Water consumption is kept below 0.2 (L / hL of wine) / (% reduction of specific conductivity) under typical conditions of tartaric stabilization of wines, discharging the brine and then adding clean water at time intervals of preferably less than 2 hours.

The process also allows real-time monitoring, with an accuracy less than 0.25 L/ hL of wine, of the volume of wine lost or the volume of brine leaked to the wine, by measuring the brine level between discharges. The process can also ensure a precise balance of the pressures of the wine and the brine in the electrodialysis module by incorporating a suction pump at the wine exit from the electrodialysis module. The polarity change is done by a safe hand-held device that prevents the operator from crossing the stream of brine with the stream of wine.

### Background

Electrodialysis is a classic technique for tartaric stabilization of wines that has been authorized by the OIV since 2000. Nevertheless, this technology still has problems that remain unresolved. One of them is the excessive water consumption, which is of the order of 25 L of water per hL of treated wine [1,2]. Especially in hot climate regions with water scarcity, excessive water consumption may render electrodialysis impracticable.

In the process of tartaric stabilization by electrodialysis, potassium bitartrate or calcium tartrate is transferred from wine to an acidified aqueous solution, called brine, under the action of an electric field. The brine pH is maintained at values typically between 3 and 4 to prevent calcium carbonate precipitation and, at the same time, to minimize the loss of fixed acidity of the wine. Since the solubility of potassium bitartrate in water is relatively low, it is necessary to use between 10 and 15 L of water per hL of treated wine to prevent precipitation of potassium bitartrate in the electrodialysis module, which then forces to stop the process in order to wash the membranes. This specific water consumption is referred to herein as direct specific water consumption so as to distinguish it from the specific consumption of the water used for washing the membrane module and equipment, which is about 10 L of water per hL of treated wine [2].

The process typically operates continuously, with the wine passing through the membrane module and getting out deionized. In the brine circuit there is, in a continuous mode, a make-up of water and a brine purge, concentrated mainly on potassium bitartrate or calcium tartrate, which are the main organic salts coming from wine.

As the brine does not come out completely saturated with potassium bitartrate or calcium tartrate, it is still possible to recover water by reverse osmosis [1], thus reducing the specific direct water consumption, which can decrease to 5 L values of water per hL of wine. This additional reverse osmosis process makes tartaric stabilization of wines a more complex operation with higher investment and operating costs. Still, even using reverse osmosis, water consumption is still higher than 12 L per hL of wine consumed in classic cold stabilization [2]. Conceptually, it is always possible to crystallize potassium bitartrate or calcium tartrate from the concentrated reverse osmosis stream in order to reduce water consumption thereafter. The integrated process of electrodialysis followed by crystallization, however, is much more complex and in practice is not used.

Apart from substantial water consumption, tartaric stabilization of wine has yet another problem that has not been properly recognized. Although brine, which receives potassium bitartrate or calcium tartrate from wine, is separated from it by the ion exchange membranes, the system's tightness is not absolute and wine losses to brine, or leakage of brine to wine, may occur, in case there is a pressure imbalance between the two streams. A pressure difference greater than 0.1 bar between the two streams is sufficient to have leakage from one stream to the other, which may be up to 0.5% of the wine flow under normal operating conditions [2], which is also a drawback of the systems / methods currently used for tartaric stabilization of wine.

Since brine leakage into the wine may compromise all treated wine, because brine may contain nitric acid or sulfuric acid, the system usually operates with the pressure of the wine above the brine pressure, and there are always some wine losses, which constitutes a drawback of the methods currently used in tartaric stabilization of wine. Typically, the wine pressure in the feeding of the electrodialysis modules is between 0.05 and 0.2 bar above the brine pressure. This procedure is considered sufficient to prevent brine leakage, but in fact it is not.

### General Description

This disclosure reveals a new process of wine electrodialysis that consumes less water, has fewer wine losses and that allows to measure in real time whether there is brine leakage to wine or loss of wine to brine.

In the present disclosure, the term brine is defined as an aqueous solution containing potassium bitartrate or calcium tartrate from the wine which will be subjected to tartaric stabilization by electrodialysis.

An aspect of the disclosure is that the process is characterized in that the brine discharge is done in a discontinuous mode, with a time interval between discharges of preferably less than 2 hours and the specific direct water consumption being less than 5 L / hL of treated wine, for wine deionization degrees up to 30%. This form of operation surprisingly allows operating with very low direct specific water consumptions, in particular up to 5 L/ hL, without precipitation of potassium bitartrate or calcium tartrate in the membrane module, as observed in the experimental trials described below. Experimentally it has been found that citric acid contributes to reach high degrees of brine over-saturation. Thus, the minimum water consumption is obtained when operating simultaneously with periodic brine renewal and brine acidification using citric acid.

In another aspect of the disclosure, the process developed allows monitoring of the wine lost to the brine, or the leakage flow rate from brine to wine, by varying the brine level in the respective tank.

Another aspect of the disclosure, is that the process has a suction pump in the wine outlet stream of the electrodialysis module, so as to ensure that, at the outlet of the electrodialysis module, the difference between wine pressure and brine pressure is within the recommended limits for the electrodialysis module, typically between 0.05 and 0.2 bar.

Another aspect of the disclosure is a device for exchanging streams in the electrodialysis module when reversing polarity, characterized in that it has two horizontal and vertically aligned bars, where the flexible tubes carrying the wine and the brine fit together, the two bars are connected to a vertical axis supported by two auxiliary bars, which are fixed in metal conduits connecting the wine and brine streams to the electrodialysis module, the two bars are attached to a metal handle, and wherein the flexible wine and brine tubes are connected by tri-clamps to the corresponding metal conduits of wine and brine.

The present disclosure relates to a method for a continuous tartaric stabilization of wine by electrodialysis characterized, for example, by:
- providing an electrodialysis machine with a wine feed pump, a brine feed pump, a tank with level transmitter, an electrodialysis membrane module, a brine discharge control valve, a clean water supply control valve;
- filling the brine tank with clean water;
- connecting the two pumps and feeding the wine to the electrodialysis machine continuously and adjusting the electric potential to achieve the desired degree of deionization for the wine to be treated;
- discharging the brine water between time intervals and adding clean water to the tank by manipulating the brine discharge control valve and the clean water supply control valve; and
- repeating the brine tank charging and discharging cycles until the wine is completely treated.

In one embodiment, the tank charging and discharging cycle times last from 5 minutes to 3 hours, preferably between 30 minutes and one hour.

In one embodiment, the brine is discharged simultaneously with the addition of water to the tank through a distributor that minimizes mixing of the clean water with the brine, until the time all the brine has come out.

In one embodiment, the brine level is measured over time to detect for wine losses or passage of brine to the wine.

In one embodiment, the electrodialysis machine has a treated wine suction pump and the pump power is adjusted so that the brine pressure is always slightly below the wine pressure at the outlet of the electrodialysis module.

In one embodiment, the electrodialysis machine has a device for exchanging streams in the electrodialysis module when reversing polarity, characterized by having two horizontal and vertically aligned bars, where the flexible tubes carrying the wine and brine fit together, the two bars are connected to a vertical axis supported by two auxiliary bars that are fixed to metal conduits that connect the wine and brine streams to the electrodialysis module, the two bars are welded to a metal handle, and wherein the wine and brine flexible tubes are connected by tri-clamps to the corresponding wine and brine metal conduits.

In one embodiment and in order to prevent the pressure difference from being greater than 0.1 bar between the wine and brine streams, it is necessary to balance the inlet pressures, with the wine pressure having to be slightly higher than the brine pressure, and for this purpose a suction pump is required, which causes the wine and brine pressures, at the outlet, to be very close. In this way it is also possible to eliminate a tank in relation to the state of the art as well as it is also possible to eliminate the nitrogen stream.

Accordingly, the present disclosure relates to a method for reducing water consumption in tartaric stabilization of wine by electrodialysis, comprising the following steps:
feeding a tank with water by means of a first valve;
passing a stream of water between the tank and an electrodialysis module;
feeding the electrodialysis module with wine to be treated so that potassium bitartrate or calcium tartrate pass from the wine to be treated to the water stream which flows between the tank and the electrodialysis module, so that the water stream is saturated with potassium bitartrate or calcium tartrate;
emptying the water tank by means of a second valve when the water stream is saturated with potassium bitartrate or calcium tartrate; and
wherein the steps of filling the tank with water and emptying the water tank are carried out at a time interval equal to or less than 3 hours.

In another aspect the present disclosure relates to a method for reducing the water consumption in tartaric stabilization of wine by electrodialysis, comprising the following steps:
passing an aqueous stream comprising a weak organic acid between a tank and an electrodialysis module;
feeding the electrodialysis module with a stream of wine to be treated so that potassium bitartrate or calcium tartrate pass from the wine to be treated to the aqueous stream which flows between the tank and the electrodialysis module, so that during the passage of the aqueous stream through the electrodialysis module, the potassium bitartrate or
calcium tartrate, initially present in the wine stream, are transferred to the aqueous stream;
and discarding the aqueous stream when it reaches a certain saturation point of potassium bitartrate or calcium tartrate.

In a further embodiment, the method of the present disclosure wherein the point of saturation of potassium bitartrate or calcium tartrate in the aqueous stream occurs by the appearance of precipitate in the aqueous stream.

In a further embodiment, the method of the present disclosure comprises the step of feeding a tank with water and adding a weak organic acid in order to obtain an aqueous stream.

In one embodiment and for obtaining even better results, the method now disclosed may further comprise a step of adding citric acid or malic acid to the water stream.

In a further embodiment, the method of the present disclosure comprises a step of emptying the water tank when the aqueous stream is saturated with potassium bitartrate or calcium tartrate.

In another embodiment, and for obtaining even better results, the step of adding citric acid or malic acid to the water stream may be carried out so that the water pH is at least 3.0, preferably between 3.5 and 4.5, and even more preferably between 3.5 and 4.0.

In one embodiment, the steps of filling the tank with water and emptying the water tank may be carried out at a time interval between 5 min - 2 hours, preferably between 15 min - 90 min, more preferably 30 min - 1 hour.

Method according to any one of the preceding claims comprising a step of feeding a tank with water by means of a first valve.

Method according to any preceding claims wherein the weak acid is citric acid, malic acid or combinations thereof.

In one embodiment, the water stream which flows between the tank and the electrodialysis module is a brine stream.

In one embodiment, the steps of filling and emptying the tank may be repeated until the wine is treated.

In one embodiment, the step of filling the tank with water by means of the first valve and the step of emptying the water tank by means of the second valve can be carried out simultaneously in order to keep the water level constant in the tank.

In a further embodiment, the method of the present disclosure comprises a step of emptying the water tank by means of a second valve when the aqueous stream is saturated with potassium bitartrate or calcium tartrate.

In one embodiment, the step of emptying the water tank by means of the second valve can be carried out in laminar flow and at low speed by means of a distributor element.

In one embodiment, the method now disclosed may comprise a step of collecting the treated wine by means of a suction pump such that the pressure difference between the wine and the water stream or the brine is at least 0.05 bar, preferably 0.05-0.2 bar, even more preferably 0.05-0.1 bar.

In one embodiment, the suction pump is a centrifugal pump.

In one embodiment, the step of feeding the electrodialysis module with wine to be treated may be preceded by a step of passing the wine to be treated through a particulate filter.

In one embodiment, the method now disclosed may comprise a step of adding a strong inorganic acid dissolved in water in order to dissolve precipitated potassium bitartrate or precipitated calcium tartrate in the electrodialysis module.

In one embodiment, the wine may be red wine or white wine.

The present disclosure also relates to the use of citric acid to reduce water consumption in tartaric stabilization of wine by electrodialysis.

In one embodiment a method is described wherein the steps of filling the tank with water and emptying the water tank are carried out at a time interval equal to or less than 3 hours.

In one embodiment a method is described wherein the steps of filling the tank with water and emptying the water tank are carried out with a time interval of between 5 min - 2 hours, preferably between 15 min - 90 min, even more preferably 30 min - 1 hour.

In one embodiment the method of the present disclosure comprises a step of identifying the increase in the degree of brine turbidity and / or the decrease of brine flow rate.

Another aspect of the present disclosure describes an electrodialysis device for carrying out the method according to any of the preceding claims.

Another aspect of the present disclosure relates to the use of citric acid or malic acid or mixtures thereof to acidify brine and reduce water consumption in tartaric stabilization of wine by electrodialysis.

Another aspect of the present disclosure relates to the use of using weak organic acids, in particular the use of citric acid, or malic acid, or mixtures thereof, as water reducers in tartaric stabilization of wine by electrodialysis.

### Brief Description of the Figures

These and other objects, features and advantages of the disclosure will be more apparent from the following detailed description when read in conjunction with the accompanying drawings.
**FIG. 1** depicts a detailed scheme of one embodiment of the electrodialysis process for tartaric stabilization of wines.
**FIG. 2** is a front view of the wine and brine streams exchange device in the electrodialysis module.
**FIG. 3** depicts a scheme of an alternative process for implementing the brine renewal and discharging cycles.

### Detailed Description

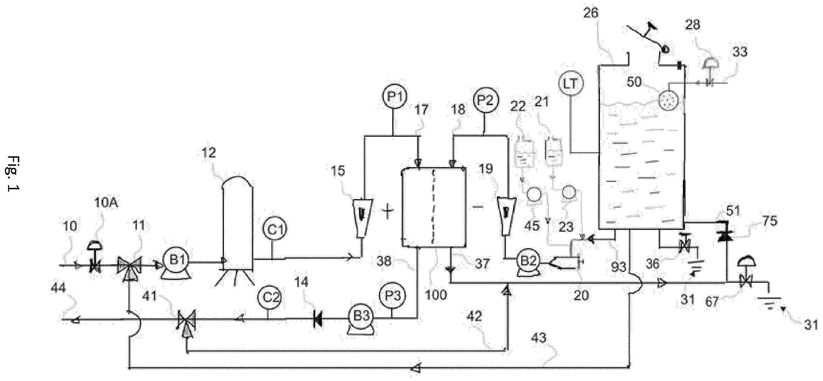

An embodiment of the tartaric wine stabilization process is shown in **Fig. 1**. The raw wine to be stabilized, which is in a raw wine tank, continuously enters the tartaric stabilization process through the stream **10** and gets out partially deionized through the stream **44.** This stream **44** has a non-return valve **14** to prevent treated wine, when under pressure in a treated wine tank, from returning to the membrane module after the process has been stopped.

During the continuous wine stabilization phase, valve **10A** opens, and valve 11 and valve **41** are manipulated so that the wine passes through pump **B1** and the treated wine flows out through stream **44.** Raw wine passes through particulate filter **12** and enters the electrodialysis module via stream **17.** Wine and brine flow rates are measured using rotameters **15** and **19,** respectively. Wine treated by electrodialysis passes through the suction pump **B3.** Suction pump **B3** is preferably a centrifugal pump so that there are no strong interactions between this pump **B3** and pump **B1** during start-up and during continuous process control.

During the continuous operation of treatment of raw wine, the specific conductivity of the raw wine and the treated wine is measured using the specific conductivity meters C1 and C2, respectively. The electric potential applied to the electrodialysis module is adjusted so that the reduction of the specific conductivity of the wine is equal to the desired value for the wine to be stable. In the electrodialysis module **100,** potassium bitartrate or calcium tartrate pass from wine to the brine stream. This brine stream flows between tank **26** and electrodialysis module **100** through the streams **18** and **37.**

In washing mode of the electrodialysis module **100,** the wine is removed from the machine and valves **11** and **41** are manipulated in order to activate the streams **43** and **42.** Thus, the washing solution, which is added to tank **26,** circulates in all compartments of the electrodialysis module and returns to the tank **26.** At the end, the washing solution is then discharged by opening the valve **36** or the valve **67.**

One aspect of the disclosure consists in feeding water to the tank **26** discontinuously, during the wine treatment. Instead of operating with a given make-up water flow rate to the tank **26,** the latter is periodically emptied and again refilled with acidified clean water at time intervals of preferably less than 2 hours. The main advantage of this mode of operation is that surprisingly it turns out possible to reduce direct specific water consumption to values below 5 L / hL of wine, for deionization degrees of wine up to 35%. This means that electrodialysis can operate with a specific direct water consumption very similar to that of the cold process of tartaric stabilization.

In one embodiment, thus and under typical conditions of tartaric stabilization of wines, no precipitation of potassium bitartrate or calcium tartrate is observed and the process proceeds normally, even at relatively low temperatures of about 10 ° C. Experimentally, in the examples given, it was observed that the minimum direct consumption of water is obtained when brine is acidified with citric acid instead of sulfuric acid or nitric acid. For this reason, under the preferred operating conditions, the system should operate with brine acidified with citric acid.

In one embodiment, valve **67** periodically opens in order to discharge the brine into sewage **31.** Once the tank is discharged, valve **28** opens and clean water enters into the tank through stream **33** until the tank is again refilled. This cycle repeats until all the wine is processed. Preferably, to prevent brine pump **B2** from de-priming, valves **67** and **33** can be opened simultaneously in order to keep the liquid level constant in tank **26.** In this case, the liquid level in the tank is measured with the level transmitter **LT** and valve **33** opens or closes in order to keep this level constant. Distributor **50** can also be used, which is designed so that clean water discharge is effected in laminar flow and at low speed, so that there is no significant mixing of clean water with concentrated brine, which is the denser and remains at the bottom of the tank.

Another aspect of the disclosure is the periodic addition of citric acid and a strong acid, such as nitric or sulfuric acid, to the brine. At the end of the brine discharge, water acidified with a food-grade strong acid may be passed for a short time, with a pH of less than 2, in order to dissolve potassium bitartrate or calcium tartrate, which may have precipitated in the electrodialysis module. The used volume of acidified water with strong acid should not exceed more than 1 L / hL of treated wine in a given cycle, one cycle being defined by filling and emptying tank **26** once. For this purpose, a strong acid metering pump **23** is used which injects strong acid from tank **21** to stream **93.** The injection is made prior to the protective filter **20** of pump **B2** to re-dissolve potassium bitartrate or calcium tartrate which may also have precipitated therein. After injection of strong acid, food grade citric acid is added to the brine at the beginning or during the cycle in order to keep the pH always below 4.0. The citric acid in the reservoir **22** is metered through metering pump **45.**

Another aspect of the disclosure is a rigorous method of identifying whether there are wine losses or brine leaks to the wine in the electrodialysis modules based on monitoring the brine level in the tank, using the **LT** level meter. As valves **33** and **67** are closed, the water level in the tank should rise slowly due to the passage of water from the wine to the brine by electro-osmotic effect. The passage of current through the ion exchange membranes causes a residual water passage which is carried along with the ions. For this reason, the brine level tends to rise during wine electrodialysis. Under the conditions tested in the examples described below, this electroosmotic water flow was comprised between 0.3 and 0.5 L / (m².h), depending on the degree of deionization of the wine. Once an experimental correlation between the electro-osmotic flow and the degree of deionization of the wine is determined, it becomes possible to estimate what is the typical increase in the brine level in a given time interval. If the change in level with time deviates from this correlation, there is a sign that either there is abnormal passage of wine to brine, or abnormal passage of brine to wine.

In a further embodiment, any change in brine level in a given time interval, which deviates from the normal system value, for a given degree of wine deionization, allows immediate recognition that either there are abnormal losses of wine or there is passage of brine to the wine. With the electrodialysis module tested in the examples described below, the electroosmotic water flow rate was around 10 to 20 L/h. Any deviation relative to this predicted value can only originate in abnormal wine losses or brine leaks into the wine. In practical terms, the system is able to detect this type of leak with an accuracy that is equal to half of the electro-osmotic water flow, i.e. between 5 and 10 L / h. Given that the nominal capacity of the electrodialysis machine used was 3000 L wine per hour, the system can detect wine or brine leaks of less than 0.15 to 0.3 L per hL of treated wine, which is extremely important for real-time machine diagnostics.

Another aspect of the disclosure comprises the precise control of the pressure difference between the wine stream and the brine stream within the electrodialysis module **100.** In order to ensure that the risk of brine leakage to the wine is minimal, the pressure of the wine streams **17** and **38** should be at least 0.05 bar above the pressure of brine streams **18** and **37,** respectively. This is done by measuring pressures using pressure gauges **P1, P2** and **P3** and regulating the frequency of pump motors **B2** and **B3** using a programmable logic controller (PLC). In continuous operation, the pressure of stream **17** is set at a given value by regulating the motor frequency of pump **B1.** The PLC then receives pressure's value from gauge **P2** and regulates the frequency of pump motor **B2** so that the pressure of stream **18** is at least 0.05 bar less than the pressure of stream **17.** Preferably, this pressure difference should be comprised between 0.05 bar and 0.1 bar, in order to minimize wine losses. The pressure of stream **38** is maintained slightly above the pressure of stream **37** by regulating the motor frequency of the suction pump **B3.** The PLC receives the pressure recorded by the analog meter **P3** and manipulates the motor frequency of suction pump **B3** so that this pressure is 0.05 bar greater than pressure of stream **37.** A particularity of this aspect of the disclosure is that the process is capable of reacting to increases in discharge pressure **44** of treated wine in order to ensure that there is never a dangerous pressure imbalance between streams **38** and **37.** Increase of the pressure of stream **44,** which has repercussions until stream **38,** may occur when the wine level in the treated wine tank begins to rise.

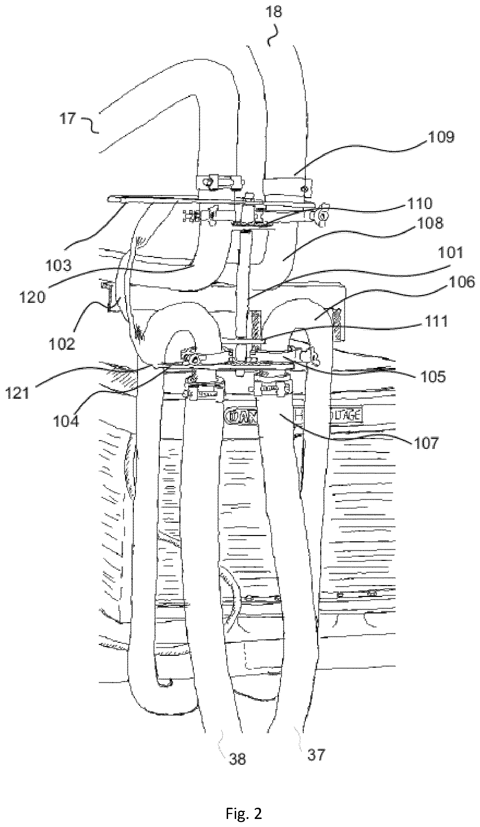

Another aspect of the disclosure is a device for exchanging the streams **17, 18, 37** and **38** when the polarity of the electrodialysis module **100** is intended to be reversed. In this case, streams **17** with **18,** and **38** with **37** need to be switched simultaneously. The daily change of polarity helps to increase the longevity of the electrodialysis module membranes and electrodes. This exchange can be done manually, but there is always the risk that the exchange is wrongly done and there will be streams crossing, passing the wine to the brine and the brine to the wine. An obvious way to overcome this problem is to use two synchronized four-way valves. These valves are, however, very expensive, increasing the cost of the process. In this disclosure, a hand-held device is used to exchange streams. This device is shown in **Figure 2**.

In a first form of polarity of the electrodialysis module, wine enters by stream **17** and exits by stream **38**, through flexible tubes, while brine enters by stream **18** and exits by stream **37**, also through flexible tubes. The flexible tubes fit into the metal tubes **108**, **106**, **120** and **121** through tri-clamps **105.** The metal tubes are immobilized by mechanical connections to the top and bottom of the electrodialysis module. The flexible tubes, at the same time, are attached to the metal plates **103** and **104.** These metal plates are centrally connected to a metal axis **101** and can rotate about this axis. The metal axis **101** is supported by the support bars **110** and **111** which are welded to the metal tubes **106, 121, 108** and **120** as shown in **Figure 2**. The handle **102** is attached to the metal plates **103** and **104** in order to ensure that the plates rotate together.

To switch the streams, the tri-clamps **105** are opened and the metal plates **103** and **104** rotate 180 degrees with the aid of the handle **102.** After the metal plates **103** and 104 rotate **180** degrees, the stream **17** passes through the metal tube **108,** the stream **18** passes through the metal tube **120,** the stream **37** passes through the metal tube **121,** and the stream **38** passes through the metal tube **106.** Thus, the module becomes able to operate in the second polarity mode, i.e. with inverted polarity, compared to the initial polarity.

### Example 1 - Citric Acid

Industrial scale trials of tartaric stabilization of wines were performed to determine specific water consumptions, using a pilot plant with a scheme similar to that of **Figure 1****.** Valves **33** and **67** were manually operated during brine discharge and fresh water addition to the tank. This facility had a nominal capacity of 3000 L of wine / hour, a tank **23** with a nominal volume of 200 L. The electrodialysis module was supplied by General Electric (USA) using CR67 homogeneous cation exchange membranes and AR204 homogeneous anion exchange membranes, with an effective area of 30 m² of membrane pairs. The wine feed pressure was 2.0 bar and the brine feed pressure was 1.95 bar. The pressure before non-return valve **75** was 1.20 bar and the pressure set point **P3** before pump was adjusted to 1.25 bar. Brine pH was maintained between 3.5 and 4.0 throughout all trials, with only a concentrated citric acid solution added to tank **26.** It was not necessary, in any trial, to use a strong acid to lower the brine pH to clean the electrodialysis module. The load loss in the module was always constant throughout the tests, which showed no precipitation of potassium bitartrate or calcium tartrate.

The results regarding these pilot trials of tartaric stabilization of wines are shown in **Table 1.** Three red wines and two white wines with wine volumes up to 32 000 L were tested. The facility worked without precipitation problems of potassium bitartrate or calcium tartrate, and without severe membrane clogging, during 22 hours of operation over 3 days. The tank was cyclically filled with 150 L of fresh water. At the end of the cycle, water was only added after the brine began to reach the bottom of the tank. Due to the manual operation of valves **67** and **33,** there was always a fraction of the brine that was never fully discharged in order to prevent pump **B2** from de-priming.

The results presented in **Table 1** show that under typical conditions of tartaric stabilization of wines, it is possible to achieve specific consumptions that are less than 5 L / hl of wine, in one of the cases being it possible to be up to 2.6 L / hL. The residence time of the brine in the tank was always comprised between about 1.5 and 2.0 hours.

The brine tank was quite oversized in the pilot plant, its volume being possible easily reduced to 50 L in a new plant. This 50 L volume still contains enough water to easily wash the membrane module. For this reason, the average recommended times for brine replacement with fresh water can be reduced by up to half an hour. Reducing residence time lowers the risk of precipitation of potassium bitartrate or calcium tartrate or other poorly soluble salts. In the limit, the brine residence time in the tank can still be further reduced, but in this case it is already necessary to use, in addition to the brine tank, a second larger tank to wash the electrodialysis module.

The water consumption results in **Table 1** can still be normalized by dividing the water consumption by the degree of specific conductivity reduction in %. This calculation for the tested wines gives a water consumption of the electrodialysis process which is approximately comprised between 0.1 and 0.2 (L / hL of wine) / (% specific conductivity reduction). Given that the amount of potassium bitartrate or calcium tartrate passing into brine increases linearly with the degree of deionization, the previous range of water consumption per % of specific conductivity reduction allows an estimate of the average water consumption for a given wine intended to be stabilized. In these trials, the electro-osmotic water flow rate from wine to brine ranged from 10 to 20 L / h, depending on the degree of deionization of the wine.

**Table 1. Results of operation of tartaric stabilization of various wines by electrodialysis.**

| Wine type | Wine vol. (L) | Initial spec. cond. (miliS/cm) | % reduction of spec. cond. | T (°C) | Total duration time of the process(min) | Number of brine discharges^{a)} | Time interval between disch. of brine tank (min) | Average water consumption (L H₂O / hL wine) |
|---|---|---|---|---|---|---|---|---|
| red | 32000 | 2.75 | 15% | 10.6 | 690 | 6 | 115 | 2.8 |
| red | 10500 | 2.28 | 21% | 10.8 | 235 | 2 | 117.5 | 2.9 |
| red | 8000 | 2.62 | 16% | 10.9 | 180 | 2 | 90 | 3.8 |
| white | 5000 | 1.52 | 25% | 10.5 | 130 | 1 | 130 | 2.6 |
| white | 4000 | 1.82 | 26% | 13.5 | 95 | 1 | 95 | 3.8 |

| | | | | | | | | |
|---|---|---|---|---|---|---|---|---|
| ^{a)} The volume of fresh water added to the tank in each cycle was 150L. | | | | | | | | |

### Example 2 - Citric acid vs. Sulfuric acid

To study the impact of using citric acid on reducing the water consumption of electrodialysis, the same batch of wine was stabilized in two different trials using sulfuric acid in one case and citric acid in another one to acidify the brine. The electrodialysis prototype used was the same as in example 1, operating with discontinuous water addition and brine discharge.

In each test the red wine flow rate was 3000 L/h and 6000 L of wine was processed. Red wine had an initial specific conductivity of 2380 microS/cm, the degree of deionization imposed was 25% and the brine pH was maintained between 3.5-4.0 by periodic addition of acid. The applied electric potential was 150 Volt and the electric current was comprised between 14.5-17 Ampere.

In the citric acid trial, about 1 kg of acid / hour was used to keep the pH within the previous range. In the sulfuric acid trial about 0.5 kg / h was used.

In the citric acid trial, the brine tank was initially filled with 200 L of water. With this volume it was possible to process 6000 L of red wine, without occurring precipitate formation in the brine. Under these conditions, water consumption was 3.3 L of water / hL of wine. A 750 mL sample of brine was also taken at the end of the cycle which was left at room temperature for 24 hours. At the end of this period, a precipitate formed at the bottom of the bottle was observed, indicating that the brine was supersaturated. After filtration and drying of the precipitate, 5.5 g/L was found to precipitate.

In the sulfuric acid trial, the brine tank was initially filled with 200 L of water. With this volume it was possible to process 3750 L of red wine. In this sulfuric acid trial, white and fine precipitates were formed in the brine tank after 75 minutes. At that time the tank brine was immediately discharged and water was introduced again to continue the process. In this case, the water consumption, referred to a brine charging and discharging cycle, was 5.3 L of water / hL of wine.

Thus, in these trials there was a saving of 2 L of water / hL of wine when citric acid was used versus sulfuric acid.

These two tests show that the use of citric acid makes it possible to operate under conditions of maximum brine supersaturation. On the other hand, this example also shows that it is possible to simply recover the potassium bitartrate or calcium tartrate contained in the brine under operating conditions with citric acid, as they precipitate naturally and at room temperature.

### Example 3 - Citric acid vs. Nitric Acid

To study the impact of using citric acid on reducing the water consumption of electrodialysis, the same batch of wine was stabilized in two different trials, using nitric acid in one case and citric acid in another case to acidify the brine. The electrodialysis prototype used was the same as in examples 1 and 2, operating with discontinuous water addition and brine discharge.

In each test the red wine flow rate was 3200 L/h and a total of 17000 L of wine was processed. The red wine had an initial specific conductivity of 2510 microS / cm, the degree of deionization imposed was 30% and the brine pH was maintained between 3.5-4.0 by periodic addition of acid. The applied electric potential was 150 Volt and the electric current was comprised between 15-21 Ampere.

In the nitric acid trial, the brine tank was initially filled with 200 L of water, and nitric acid was added to ensure an initial pH of 3.0. Throughout the process, doses of nitric acid were added to maintain the brine pH between 3.5-4.0. After 73 minutes the brine was cloudy, its flow rate decreased and precipitate formation began. Under these conditions, water consumption was 5.1 L of water / hL of wine.

In the citric acid trial, the process was started with the brine tank equally filled with 200 L of water. In this case the amount of citric acid required to obtain an initial pH of 3.0 was added. Throughout the process, doses of citric acid were added to maintain the brine pH also between 3.5-4.0. The process proceeded normally with a decrease in flow rate only at 109 minutes. The brine was cloudy but with lower turbidity degree than in the nitric acid test. Under these conditions, water consumption was 3.4 L of water / hL of wine.

Thus, in these trials there was a saving of 1.7 L of water / hL of wine when citric acid was used versus nitric acid.

These two trials show that with the use of citric acid it is possible to operate under maximum brine supersaturation conditions and to treat more wine with the same volume of water.

### Example 4- Malic Acid

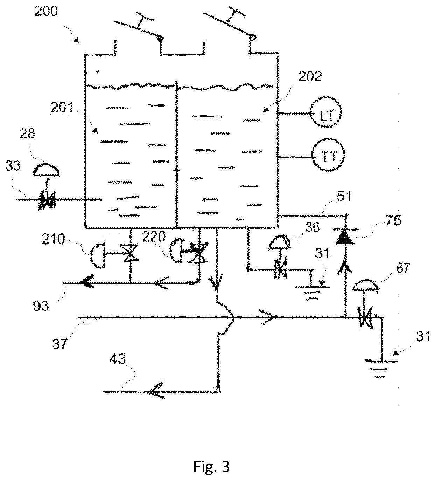

An additional industrial scale tartaric wine stabilization test was performed to determine specific water consumptions using the same pilot plant as examples **1** to **3** but with the changes shown in **Figure 3** and using malic acid to acidify the brine. In order to reduce water consumption, a new feed tank **200** with two compartments **201** and **202** was used. The volume of each tank **201** and **202** was 100 L. The valves **28, 210, 220, 36** and **67** were manually operated during brine discharge and fresh water addition to the tank. This new configuration makes it possible to minimize the amount of concentrated brine residual left in the system after the brine charging and discharging cycle.

In this example 40000 L of red wine with an initial conductivity 2390 microS / cm and a pH 3.53 was used, with the desired deionization degree of 20%. The wine was fed continuously to the machine at a flow rate of 3000 L / h and the brine was renewed periodically in cycles with a duration of about 75 minutes. The electric potential applied to the membrane module was adjusted to reduce the specific electrical conductivity of the wine by 20%. The wine feed pressure was 2.0 bar and the brine feed pressure was 2.5 bar. The pressure before non-return valve **75** was 1.20 bar and pressure set point **P3** before pump was adjusted to 1.25 bar.

The trial began with the compartments **201** and **202** filled with water. 4.5 L of a solution with 150 g/L of malic acid was added to compartment **201.** The valve **220** was then opened and the valve **210** was closed in order to circulate the brine through the stream **93.** At the end of each cycle, the valves **67, 210, 28** and **36** were opened and the valve **220** was closed. Immediately fresh water entered into the brine stream **93** in order to completely remove the concentrated brine flowing in the membrane module. At the same time, the concentrated brine was discharged to the sewage **31.**

The time required for fresh water to flow out through stream **37** was about 30 seconds. At the end of this time interval, valves **67** and **36** were again closed, and valve **220** was opened, and 4.5 L of the malic acid solution was added manually. The valves **28** and **210** had to be kept open for about 5 minutes to allow compartments **201** and **202** to refill again with fresh water. After this step, the valves **28** and **210** were closed.

During the test, the pH, specific conductivity and turbidity of the brine were recorded using manual meters. Although turbidity measurement was done manually, **Figure 4** proposes the placement of a TT turbidity meter in order to automate the process. The brine flow rate, which was measured with a rotameter, was also recorded. The results regarding this red wine tartaric stabilization test are presented in **Table 2** for the second brine renewal cycle. These results show that it is possible to operate with 75 min brine discharge cycles. In the final phase of the cycle, a reduction in brine flow rate was observed and an increase in brine turbidity, originated by the presence of small crystals that were visible in the rotameter. After removal of brine and introduction of fresh water with malic acid, the brine flow rate returned to the normal value, which showed that there was no irreversible blockage of the brine channels of the membrane module. This test shows that, with the process herein described wherein malic acid is used, it is possible to make tartaric stabilization of a red wine by electrodialysis, with 20% deionization, using only 2.7 L of fresh water / hL of wine. The test further shows that brine discharge can be done immediately when the brine flow rate begins to decrease, or when turbidity begins to increase significantly.

**Table 2. Operating results of tartaric stabilization of a red wine during the second cycle of brine water renewal, using malic acid to acidify the brine. The results presented refer to the brine.^{a}**

| Time (min) | pH | Specific electric conductivity (microS/cm) | Turbidity (NTU) | Flow rate |
|---|---|---|---|---|
| 0 | 3.7 | 5.48 | 5 | 3000 |
| 3 | 3.9 | 9.10 | 7.8 | 3000 |
| 36 | 4.4 | 15.30 | 12 | 3000 |
| 45 | 4.6 | 17.50 | 17 | 3000 |
| 57 | 4.7 | 19.50 | 15 | 3000 |
| 72 | 4.9 | >20 | 24 | 2980 |
| 75 | 4.9 | >20 | 50 | 2900 |

| | | | | |
|---|---|---|---|---|
| a) The processed red wine had a specific electrical conductivity of 2390 micros / cm and a pH 3.53. The degree of deionization of the wine by electrodialysis was 20% and the temperature of the wine was 14 °C. The brine was initially acidified with 4.5 L of aqueous malic acid solution with a concentration of 150 g/L. | | | | |

Although only particular embodiments of the present disclosure have been represented and described, the skilled person will be able to introduce modifications and replace some technical characteristics for equivalent ones, depending on the requirements of each situation, without departing from the scope of protection defined by the appended claims.

The embodiments presented are combinable with each other. The following claims further define embodiments.

### References

[1] Bories, A., Y. Sire, D. Bouissou, S. Goulesque, M. Moutounet, D. Bonneaud, and F. Lutin. "Environmental impacts of tartaric stabilisation processes for wines using electrodialysis and cold treatment." South African Journal of Enology and Viticulture 32, no. 2 (2011): 174.
[2] Forsyth, Karl. "Comparison between electrodialysis and cold treatment as a method to produce potassium tartrate stable wine." AWRI Project number: PCS 10004 (2010): 53-58.
[3] Allison, Robert P. "High water recovery with electrodialysis reversal." In Proceedings American Water Works Assoc. Membrane Conference, pp. 1-4. 1993.

## Claims

1. Method for reducing water consumption in tartaric stabilization of wine by electrodialysis, comprising the following steps:
passing an aqueous stream comprising a weak organic acid between a tank and an electrodialysis module;
feeding the electrodialysis module with a stream of wine to be treated so that potassium bitartrate or calcium tartrate passes from the wine to be treated to the aqueous stream which flows between the tank and the electrodialysis module, so that during the passage of the aqueous stream through the electrodialysis module, the potassium bitartrate or calcium tartrate initially present in the wine stream are transferred to the aqueous stream;
and discarding the aqueous stream when it reaches a certain saturation point of potassium bitartrate or calcium tartrate.

2. Method according to the preceding claim wherein saturation point of potassium bitartrate or calcium tartrate in the aqueous stream occurs by the appearance of precipitate in the aqueous stream.

3. Method according to any one of the preceding claims comprising the step of feeding a tank with water and adding a weak organic acid in order to obtain an aqueous stream.

4. Method according to any one of the proceeding claims comprising a step of adding citric acid or malic acid to the aqueous stream.

5. Method according to any one of the preceding claims comprising a step of emptying the water tank when the aqueous stream becomes saturated with potassium bitartrate or calcium tartrate.

6. Method according to any one of the preceding claims comprising a step of feeding a tank with water by means of a first valve.

7. Method according to any one of the preceding claims wherein the weak acid is citric acid, malic acid or combinations thereof.

8. Method according to any one of the preceding claims comprising a step of emptying the water tank by means of a second valve when the aqueous stream is saturated with potassium bitartrate or calcium tartrate.

9. Method according to any one of the preceding claims wherein the steps of filling the tank with water and emptying the water tank are carried out at a time interval equal to or less than 3 hours.

10. Method according to the preceding claim, wherein the step of adding citric acid to the water stream is carried out such that the water pH is at least 3.0.

11. Method according to the preceding claim, wherein the step of adding citric acid to the water stream is carried out such that the water pH is 3.5-4.5.

12. Method according to any one of the preceding claims 3-4, wherein the step of adding citric acid to the water stream is carried out such that the water pH is 3.5-4.0.

13. Method according to any one of the preceding claims, wherein the steps of filling the tank with water and emptying the water tank are carried out with a time interval between 5 min - 2 hours, preferably between 15 min - 90 min, most preferably 30 min - 1 hour.

14. Method according to any one of the preceding claims, wherein the aqueous stream which flows between the tank and the electrodialysis module is a brine stream.

15. Method, wherein the method steps according to any one of the preceding claims are repeated until the wine is treated.

16. Method according to any one of the preceding claims, wherein the step of filling the tank with water by means of the first valve and the step of emptying the water tank by means of the second valve are carried out simultaneously in order to maintain the water level constant in the tank.

17. Method according to any one of the preceding claims, wherein the step of emptying the water tank by means of the second valve is carried out in laminar flow and at low speed by means of a distributor element.

18. Method according to any one of the preceding claims, comprising a step of collecting the treated wine by means of a suction pump such that the pressure difference between the wine and the brine is at least 0.05 bar.

19. Method according to the preceding claim, wherein the pressure difference of wine and brine is preferably 0.05-0.1 bar.

20. Method according to any one of the preceding claims 18-19, wherein the suction pump is a centrifugal pump.

21. Method according to any one of the preceding claims, wherein the step of feeding the electrodialysis module with wine to be treated is preceded by a step of passing the wine to be treated through a particulate filter.

22. Method according to any one of the preceding claims, comprising a step of adding a strong inorganic acid dissolved in water in order to dissolve precipitated potassium bitartrate or precipitated calcium tartrate in the electrodialysis module.

23. Method according to any one of the preceding claims, comprising a step of identifying the increase in the degree of brine turbidity and / or the decrease of brine flow rate.

24. Method according to any one of the preceding claims, wherein the wine is red wine or white wine.

25. Electrodialysis device for carrying out the method according to any one of the preceding claims.

26. Use of citric acid or malic acid to acidify the brine and to reduce water consumption in tartaric stabilization of wine by electrodialysis.
